## Europäisches Patentamt
## European Patent Office
## Office européen des brevets

(19)

(11) Veröffentlichungsnummer: **0 187 202**
**B1**

(12)

# EUROPÄISCHE PATENTSCHRIFT

(45) Veröffentlichungstag der Patentschrift:
**14.12.88**

(51) Int. Cl.⁴: **F 16 K 5/20**

(21) Anmeldenummer: **85112287.9**

(22) Anmeldetag: **27.09.85**

(54) **Kugelhahn-Ventil.**

(30) Priorität: **18.10.84 DE 3438199**

(43) Veröffentlichungstag der Anmeldung:
**16.07.86 Patentblatt 86/29**

(45) Bekanntmachung des Hinweises auf die Patenterteilung:
**14.12.88 Patentblatt 88/50**

(84) Benannte Vertragsstaaten:
**AT BE CH DE FR GB IT LI NL**

(56) Entgegenhaltungen:
**DE-A-2 054 045**
**DE-A-2 945 153**
**DE-C-3 007 284**
**DE-C-3 208 907**
**FR-A-1 261 953**

(73) Patentinhaber: **Kernforschungsanlage Jülich Gesellschaft mit beschränkter Haftung, Postfach 1913, D-5170 Jülich 1 (DE)**

(72) Erfinder: **Delis, Konstantin, Rosenstrasse 8, D-5170 Jülich (DE)**
Erfinder: **Fleischer, Manfred, Sebastianusstrasse 9a, D-5170 Jülich (DE)**
Erfinder: **Haas, Herbert, Schnurzelter Mühle 67, D-5100 Aachen (DE)**
Erfinder: **Stein, Johann, Kasterstrasse 17, D-5170 Jülich (DE)**

(74) Vertreter: **Paul, Dieter- Alfred, Dipl.- Ing., Fichtestrasse 18, D-4040 Neuss 1 (DE)**

**Beschreibung**

Die Erfindung betrifft ein Kugelhahn-Ventil, insbesondere für den Einsatz bei wechselnden Temperaturen, mit einem Ventilgehäuse, einem darin drehbar gelagerten, im wesentlichen kugelförmigen Absperrorgan und einem durch Ventilgehäuse und Absperrorgan gehenden Durchflußkanal, wobei an zumindest einer Seite des Absperrorgans ein ringförmiger, den Durchflußkanal umgebender Sitzdichtring aus relativ starrem Material vorgesehen ist, der axial und radial beweglich ist und an einem axial beweglichen und an einem axial beweglichen und mit Federn beaufschlagten Haltering anliegt.

Ein solches Kugelhahn-Ventil ist in der DE-A-2 054 045 beschrieben. Dessen Absperrorgan wird zwischen zwei gegenüberliegenden, den Durchflußkanal umgebenden Sitzdichtringen gehalten, die jeweils unbeweglich in einem Haltering eingelassen sind. Beide Halteringe sind als Metallfedern ausgebildet und liegen mit ihren jeweils außenseitigen Enden an konisch ausgebildeten Dichtflächen an. Die Halteringe geben den Sitzdichtringen für die Anlage an dem Absperrorgan eine in axialer Richtung wirkende Vorspannung. Durch die stirnseitige Anlage der Halteringe am Ventilgehäuse ist eine gewisse radiale Beweglichkeit der Halteringe und damit der Sitzdichtringe gegeben.

Die vorbekannte Lösung weist trotz der axialen und in gewissen Grenzen radialen Beweglichkeit erhebliche, prinzipielle Nachteile auf. Diese liegen insbesondere in der Abstützung der Halteringe am Ventilgehäuse, da dort eine Doppelfunktion zu erfüllen ist, nämlich die gleitende Abstützung bei Sicherung der Dichtfunktion. Die Erfüllung dieser Doppelfunktion wird dabei dadurch erschwert, daß der Haltering aus federndem Stahl bestehen muß, der für eine Abdichtung schlecht geeignet ist. Je nach Wahl des Materials für die Sitzdichtringe sind unterschiedliche Anpreßkräfte an den Abstützflächen und an den Sitzdichtringen erforderlich, was durch diese Konstruktion nicht möglich ist. Es müssen hier Kompromisse geschlossen werden, die sich bei hohen Anforderungen, insbesondere wenn das Kugelhahn-Ventil großen Temperatursprüngen ausgesetzt ist, sehr nachteilig auswirken. Hinzu kommt, daß der als Feder wirkende Haltering direkt dem Durchflußmedium ausgesetzt ist. Große Temperatursprünge führen dann zu entsprechenden Änderungen der Vorspannung und damit der Anpreßkräfte der Sitzdichtringe mit der Folge, daß die Leckrate und das für die Verstellung des Absperrorgans notwendige Drehmoment stark schwankt. Eventuell zu garantierende Werte müssen dementsprechend ungünstig angesetzt werden.

In der DE-A-2 945 153 ist ein Kugelhahn-Ventil offenbart, bei dem ein Sitzdichtring aus Gummi in der Nut eines Halterings eingesetzt ist. Der Haltering ist über einen Kompensator mit dem Ventilgehäuse verbunden und mit Tellerfedern beaufschlagt.

Bei diesem Kugelhahn-Ventil ist nachteilig, daß der Sitzdichtring unbeweglich in dem Haltering eingefaßt ist und auch dieser radial nicht beweglich ist. Eine solche radiale Festlegung mag bei der hier vorgesehenen Verwendung von Sitzdichtringen aus Gummi vertretbar sein, da die Elastizität des Gummis eventuelle Abweichungen von der axialen Lage des Halterings gegenüber der des Absperrorgans auszugleichen vermag. Kommen jedoch, wie gattungsgemäß vorgesehen, Sitzdichtringe aus relativ starrem Material zur Anwendung, treten bei einem Einsatz des Kugelhahn-Ventils, bei dem sich die Temperaturen relativ stark verändern, stark schwankende Drehmomente für die Betätigung des Absperrorgans und zum Teil hohe, zumindest sehr stark schwankende Leckraten auf, da an eine gegenseitige Anpassungsmöglichkeit zwischen Absperorgan und Haltering nicht gedacht ist.

Der Erfindung liegt deshalb die Aufgabe zugrunde, ein Kugelhahn-Ventil der eingangs genannten Art so zu gestalten, daß es auch bei großen Temperaturänderungen ein im wesentlichen gleichbleibendes, kleines Drehmoment für die Verstellung des Absperrorgans und konstant niedrigen Leckraten gewährleistet.

Diese Aufgabe wird erfindungsgemäß dadurch gelöst, daß der Sitzdichtring an dem Haltering relativ zu diesem in radialer Richtung beweglich anliegt und der Haltering mit einem Kompensator und dieser mit dem Ventilgehäuse jeweils dicht verbunden sind, wobei die Federn außerhalb des Kompensators angeordnet sind.

Erfindungsgemäß ist also hier schon der Sitzdichtring selbst radial gegenüber dem Haltering beweglich, wobei die beiden Relativbewegungen ausführenden Dichtflächen in der Materialwahl optimiert werden können, so daß die Gleitbewegungen nicht zu einer Erhöhung der Leckrate führt. Der Haltering liegt nicht mehr gleitend an einer Abstützfläche an, sondern ist mit dem Ventilgehäuse beweglich aber völlig dicht über einen Kompensator, also einen Dehnungsausgleicher, verbunden, der die Bewegung des Halterings ausgleichen kann. Da ein Kompensator praktisch keine eigene Vorspannkraft entwickelt, können die auf den Haltering einwirkenden Federn genau auf die Erfordernisse an den Gleitflächen des Sitzdichtrings angepaßt werden. Die Federn sind dabei durch den Kompensator abgedeckt, so daß ihre Vorspannung von der Temperatur des Durchflußmediums weitgehend unabhängig ist. Entsprechend ist dieses Kugelhahn-Ventil besonders geeignet für extreme Temperaturschwankungen, denn es treten durch die besondere konstruktive Gestaltung keine wesentlichen Änderungen des für die Betätigung des Absperrorgans notwendigen Drehmoments und der Leckrate auf.

Damit der Kompensator bei einer eventuellen Demontage nicht überdehnt wird, sollten das gehäuseseitige Ende des Kompensators mit einem abnehmbaren Gehäuseflansch verbunden sein, die Federn sich am Gehäuseflansch abstützen und mit dem Gehäuseflansch verbundene Anschläge zur Begrenzung der Axialbewegung des Halterings vorgesehen sein. Als Anschläge können dabei Schraubenköpfe von Begrenzungsschrauben dienen, die über den Umfang verteilt in den Gehäuseflansch eingeschraubt sind, wobei sie dem Haltering so viel Lose geben, daß er sich bei normalen Betriebsbedingungen frei bewegen kann.

Für die Federbeaufschlagung sind zweckmäßigerweise über den Umfang verteilt mehrere Schraubenfedern vorgesehen. Es kommen aber auch andere Federarten in Frage, wie beispielsweise Tellerfedern oder dergleichen.

Die Erfindung sieht ferner vor, daß der Haltering lediglich axial geführt ist, so daß der Kompensator nur in dieser Richtung beaufschlagt wird, was günstig für seine Lebensdauer ist. Radialbewegungen führt dann nur der Sitzdichtring aus.

Zur Axialführung des Halterings kann dieser in einem Führungsring gehalten sein, der außenseitig in einer Gehäusebohrung geführt ist. Dabei können die Begrenzungsschrauben den Führungsring durchdringen. Zweckmäßigerweise ist der Führungsring dabei in axialer Richtung zweigeteilt, wobei beide Teile miteinander verbunden, beispielsweise verschraubt sind und der flanschseitige Teil einen geringeren Innendurchmesser als der Außendurchmesser des Halterings hat, so daß der Haltering eine definierte Aufnahme in dem Führungsring findet.

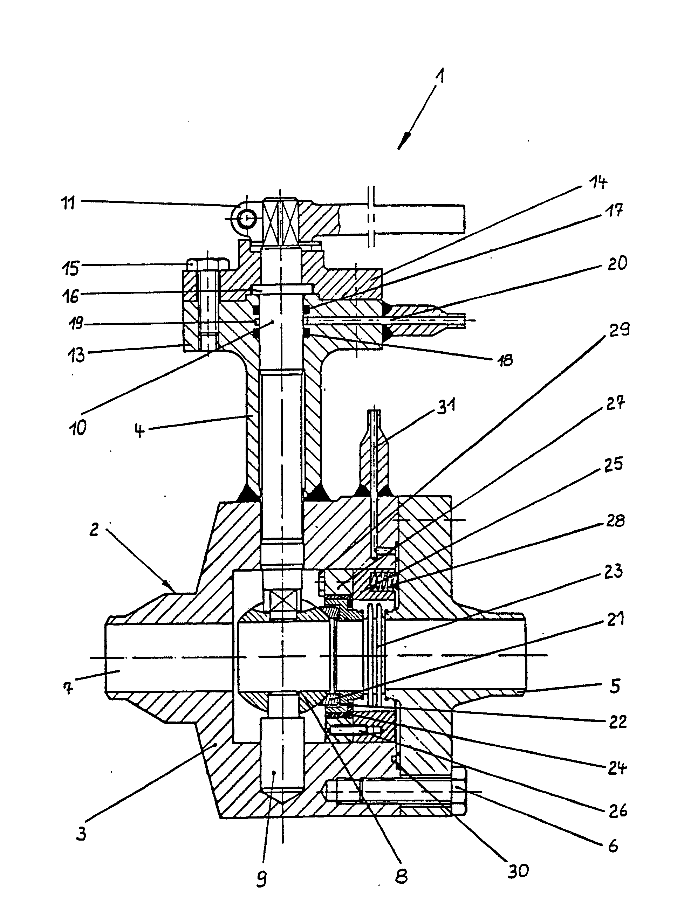

In der Zeichnung ist die Erfindung an Hand eines Ausführungsbeispiels näher veranschaulicht. Sie zeigt ein Kugelhahn-Ventil 1, das ein Gehäuse 2 aufweist, das im wesentlichen aus einem Gehäusehauptteil 3 mit einem darauf aufgeschweißten Aufsatz 4 und einem das Gehäusehauptteil 3 auf der in dieser Ansicht rechten Seite abschließenden Gehäuseflansch 5 besteht. Letzterer ist mittels Befestigungsschrauben 6 an dem Gehäusehauptteil 3 lösbar angebracht.

Durch das Gehäusehauptteil 3 und den Gehäuseflansch 5 geht ein im Querschnitt kreisförmiger Durchflußkanal 7, durch den das zu steuernde Medium fließt. Ein Teil des Durchflußkanals 7 wird von einem kugelförmig ausgebildeten Absperrorgan 8 gebildet, das um eine Vertikalachse drehbar gelagert ist. Am unteren Ende geschieht die Lagerung mittels eines im Gehäuseteil 3 gehaltenen Lagerzapfens 9, während die Führung am oberen Ende über eine Schaltwelle 10 erfolgt. Mit der Schaltwelle 10 ist das Absperrorgan 8 drehfest verbunden.

Die Schaltwelle 10 ist innerhalb des Gehäusehauptteils 3 und im Aufsatz 4 gelagert und führt aus diesem nach oben heraus. An diesem Ende ist auf die Schaltwelle 10 ein Betätigungshebel 11 drehfest aufgesetzt.

Am oberen Ende ist der Aufsatz 4 zweigeteilt, so daß ein Flansch 13 mit darauf aufgesetztem Deckel 14 entsteht. Beide Teile sind mittels Schrauben 15 befestigt. Die Schaltwelle 10 weist in diesem Bereich einen Bund 16 auf, der zwischen Flansch 13 und Deckel 14 zur Vertikalführung der Schaltwelle 10 gehalten ist. Unterhalb des Bundes 16 sind im Abstand zueinander zwei O-Ringe 17, 18 vorgesehen. Zwischen ihnen ist ein Ringkanal 19 vorgesehen, der in eine Anschlußleitung 20 mündet. Über diese Anschlußleitung 20 kann in den Ringkanal 19 Sperrgas eingeleitet werden. Es ist aber auch möglich, hierüber eine Kontrolle der Leckrate erfolgen zu lassen.

An der in dieser Ansicht rechten Seite des Absperrorgans 8 liegt ein Sitzdichtring 21 aus Poliimid an, der in der Schließstellung des Absperrorgans 8 für eine Abdichtung des rechts nachfolgenden Teils des Durchflußkanals 7 sorgt. Der Sitzdichtring 21 liegt mit seiner Rückseite an einem Haltering 22 an, der den Sitzdichtring 21 mit radialem Spiel einfaßt und gleichzeitig einen Teil des Durchflußkanals 7 bildet.

Mit dem Gehäuseflansch 5 ist der Haltering 22 über einen Kompensator 23 als gehäuseseitiges Abdichtorgan verbunden, der in gewissen Grenzen eine Axialbewegung des Halterings 22 zuläßt, jedoch praktisch nicht federnd wirkt. Der Haltering 22 ist von einem in zwei Hälften geteilten Zwischenring 24 umgeben, der mit seiner Hinterseite an einem Druckring 25 anliegt. Über Senkkopfschrauben 26 ist ein Führungsring 27 an dem Druckring 25 zur radialen Abstützung des Zwischenrings 24 befestigt. In den Druckring 25 sind flanschseitig über den Umfang verteilt kleine Schraubenfedern 28 angeordnet, die sich an dem Gehäuseflansch 5 abstützen. Die von ihnen ausgehende Federbelastung wird über den Zwischenring 24 und den Haltering 22 auf den Sitzdichtring 21 übertragen, so daß dieser entsprechend der Vorspannkraft der Schraubenfedern 28 gegen das Absperrorgan 8 gepreßt wird. Aufgrund seiner radialen Beweglichkeit kann der Sitzdichtring 21 sich dabei selbst zentrieren.

Damit bei einem eventuellen Ausbau der Dichtungsanordnung nach Lösen des Gehäuseflanschs 5 keine Überdehnung des Kompensators 23 eintritt, sind der Druckring 25 und der Führungsring 27 über Begrenzungsschrauben 29 lose mit dem Gehäuseflansch 5 verbunden. Die Befestigungsschrauben 29 sind über den Umfang jeweils im Abstand zu den Senkkopfschrauben 26 verteilt und gehen - was hier nicht zu sehen ist - bis in den Gehäuseflansch 5. Sie geben dem Druckring 25 und dem Führungsring 27 so viel Lose, daß er sich bei den vorgesehenen Betriebsbedingungen frei bewegen kann. Bei Abnahme des Gehäuseflanschs 5 bilden die Begrenzungsschrauben 29 Anschläge und begrenzen den Federweg so, daß der Kompensator 23 nicht über das zulässige Maß gedehnt wird.

Mit dieser Führung des Sitzdichtrings 21 erhält man eine einwandfreie Dichtgeometrie in jedem Betriebszustand. Bei dem gezeigten Ausführungsbeispiel wurden deshalb Heliumleckraten von weniger als $10^{-6}$ mbar.l/s erreicht. Elastische oder plastische Verformungen auf Grund von Temperaturänderungen werden durch dieses Dichtsystem automatisch ausgeglichen, so daß das Drehmoment, das für die Betätigung des Absperrorgans 8 notwendig ist, in engen Grenzen und niedrig bleibt. Auch die Dichtheit bleibt bei allen Temperaturen gewährleistet.

Zwischen dem Gehäusehauptteil 3 und dem Gehäuseflansch 5 ist noch ein Ringkanal 30 zwischen zwei Metall-O-Ringen vorgesehen. Von diesem Ringkanal 30 geht eine Anschlußleitung 31 nach außen, über die auch hier Sperrgas eingeleitet werden kann. Eine Kontrolle der Leckrate ist ebenfalls über diese Leitung 31 möglich.

**Patentansprüche**

1. Kugelhahn-Ventil (1), insbesondere für den Einsatz bei wechselnden Temperaturen, mit einem Ventilgehäuse (2), einem darin drehbar gelagerten, im wesentlichen kugelförmigen Absperrorgan (8) und einem durch Ventilgehäuse (2) und Absperrorgan (8) gehenden Durchflußkanal (7), wobei an zumindest einer Seite des Absperrorgans (8) ein ringförmiger, den Durchflußkanal (7) umgebender Sitzdichtring (21) aus relativ starrem Material vorgesehen ist, der axial und radial beweglich ist und an einem axial beweglichen und mit Federn (28) beaufschlagten Haltering (24) anliegt, dadurch gekennzeichnet, daß der Sitzdichtring (21) an dem Haltering (22) relativ zu diesem in radialer Richtung beweglich anliegt und der Haltering (22) mit einem Kompensator (23) und dieser mit dem Ventilgehäuse (2, 5) jeweils dicht verbunden sind, wobei die Federn (28) außerhalb des Kompensators (23) angeordnet sind.

2. Kugelhahn-Ventil nach Anspruch 1, dadurch gekennzeichnet, daß das gehäuseseitige Ende des Kompensators (23) mit einem abnehmbaren Gehäuseflansch (5) verbunden ist, die Federn (28) sich am Gehäuseflansch (5) abstützen und mit dem Gehäuseflansch (5) verbundene Anschläge (29) zur Begrenzung der Axialbewegung des Halterings (22) vorgesehen sind.

3. Kugelhahn-Ventil nach Anspruch 2, dadurch gekennzeichnet, daß die Anschläge als Schraubenköpfe von über den Umfang verteilten, in dem Gehäuseflansch (5) eingeschraubten Begrenzungsschrauben (29) ausgebildet sind.

4. Kugelhahn-Ventil nach einem der Ansprüche 1 bis 3, dadurch gekennzeichnet, daß für die Federbeaufschlagung über den Umfang verteilt mehrere Schraubenfedern (28) oder dergleichen Federelemente vorgesehen sind.

5. Kugelhahn-Ventil nach einem der Ansprüche 1 bis 4, dadurch gekennzeichnet, daß der Haltering (22) axial geführt ist.

6. Kugelhahn-Ventil nach Anspruch 5, dadurch gekennzeichnet, daß der Haltering (22) in einem Führungsring (25, 27) gehalten ist, der außenseitig in einer Gehäusebohrung geführt ist.

7. Kugelhahn-Ventil nach einem der Ansprüche 3 bis 6, dadurch gekennzeichnet, daß die Begrenzungsschrauben (29) den Führungsring (25, 27) durchdringen.

8. Kugelhahn-Ventil nach Anspruch 7, dadurch gekennzeichnet, daß der Führungsring (25, 27) in axialer Richtung zweigeteilt ist, wobei beide Teile (25, 27) miteinander verbunden sind und der flanschseitige Teil (25) einen geringeren Innendurchmesser als der Außendurchmesser des Halterings (22) hat.

**Claims**

1. Spherical-plug cock valve (1), especially for use with fluctuating temperatures, with a valve housing (2), a substantially spherical shutoff member (8) mounted rotatably therein, and a throughflow duct (7) which extends through valve housing (2) and shutoff member (8), there being provided at at least one side of the shutoff member (8) an annular seating sealing ring (21) of relatively rigid material which surrounds the throughflow duct (7), is movable axially and radially, and abuts on an axially movable holding ring (24) which is subjected to the action of springs (28), characterised in that the seating sealing ring (21) abuts on the holding ring so as to be movable relatively thereto in the radial direction, and the holding ring (22) is connected in sealing-tight manner to a compensator (23) and the latter is connected in sealing-tight manner to the valve housing (2, 5), the springs (28) being situated outside the compensator (23).

2. Spherical-plug cock valve according to claim 1, characterised in that the housing-side end of the compensator (23) is connected to a detachable housing flange (5), the springs (28) bear on the housing flange (5), and abutments (29) connected to the housing flange (5) are provided for limiting the axial movement of the holding ring (22).

3. Spherical-plug cock valve according to claim 2, characterised in that the abutments are constructed as the heads of limiting screws (29) which are screwed into the housing flange (5) and which are distributed over the periphery.

4. Spherical-plug cock valve according to one of claims 1 to 3, characterised in that a plurality of helical springs (28) or like spring elements are provided, distributed over the periphery, for providing the spring action.

5. Spherical-plug cock valve according to one of claims 1 to 4, characterised in that the holding ring (22) is axially guided.

6. Spherical-plug cock valve according to claim 5, characterised in that the holding ring (22) is held in a guide ring (25, 27), which is guided externally in a housing bore.

7. Spherical-plug cock valve according to one of claims 3 to 6, characterised in that the limiting screws (29) extend through the guide ring (25, 27).

8. Spherical-plug cock valve according to claim 7, characterised in that the guide ring (25, 27) is divided in two in the axial direction, the two parts (25, 27) being connected to one another, and the flange-side part (25) has a smaller internal diameter than the outer diameter of the holding ring (22).

**Revendications**

1. Robinet à boisseau sphérique (1), destiné notamment à être mis en oeuvre à des températures variables, comprenant un corps de robinet (2), un organe obturateur (8), sensiblement sphérique, qui y est monté tournant et un canal de passage (7) traversant le corps de robinet (2) et l'organe obturateur (8), une bague d'étanchéité annulaire, formant siège (21), entourant le canal de passage (7) et réalisée en un matériau relativement rigide étant prévue au moins d'un côté de l'organe obturateur (8), étant mobile axialement et radialement et s'appliquant à une bague de maintien (24) mobile axialement et chargée par des ressorts (28), caractérisé en ce que la bague d'étanchéité formant siège (21) s'applique à la bague de maintien (22) en étant mobile relativement à celle-ci dans la direction radiale, et la bague de maintien (22) est reliée de manière étanche à un compensateur (23) et celui-ci au corps de robinet (2, 5), les ressorts étant disposés en dehors du compensateur (23).

2. Robinet à boisseau sphérique suivant la revendication 1, caractérisé en ce que l'extrémité du compensateur (23), qui est du côté du corps, est reliée à une bride du corps (5) amovible, les ressorts (28) s'appuyant sur la bride de corps (5) et étant destinés avec des butées (29) reliées à la bride du corps (5), à limiter le mouvement axial de la bague de maintien (22).

3. Robinet à boisseau sphérique suivant la revendication 2, caractérisé en ce que les butées sont constituées en têtes de vis de limitation (29) réparties péripriériquement et vissées dans la bride de corps (5).

4. Robinet à boisseau sphérique suivant l'une des revendications 1 à 3, caractérisé en ce que, pour la charge par des ressorts, il est prévu plusieurs ressorts hélicoïdaux (28) ou éléments élastiques analogues répartis périphériquement.

5. Robinet à boisseau sphérique suivant l'une des revendications 1 à 4, caractérisé en ce que la bague de maintien (22) est guidée axialement.

6. Robinet à boisseau sphérique suivant la revendication 5, caractérisé en ce que la bague de maintien (22) est maintenue dans une bague de guidage (25, 27) qui est guidée, côté extérieur, dans un perçage du corps.

7. Robinet à boisseau sphérique suivant l'une des revendications 3 à 6, caractérisé en ce que les vis de limitation (29) passent à travers la bague de guidage (25, 27).

8. Robinet à boisseau sphérique suivant la revendication 7, caractérisé en ce que la bague de guidage (25, 27) est subdivisée en deux parties, dans le sens axial, les deux parties (25, 27) étant reliées entre elles et la partie (25), qui est située côté de la bride, ayant un diamètre intérieur plus petit que le diamètre extérieur de la bague de maintien (22).

0 187 202

1